# EUROPEAN PATENT SPECIFICATION

(11) **EP 3 499 214 B1**
(45) Date of publication and mention of the grant of the patent: **30.09.2020**
(21) Application number: 18208350.1
(22) Date of filing: 26.11.2018
(51) Int. Cl.: G01N 1/22

(54) **EXHAUST GAS ANALYSIS SYSTEM AND EXHAUST GAS ANALYSIS METHOD**
ABGASANALYSESYSTEM UND ABGASANALYSEVERFAHREN
SYSTÈME ET PROCÉDÉ D'ANALYSE DE GAZ D'ÉCHAPPEMENT

(30) Priority: 14.12.2017 JP 2017240079
(43) Date of publication of application: 19.06.2019
(73) Proprietor: HORIBA, Ltd., Kyoto 601-8510 (JP)
(72) Inventor: OTSUKI, Yoshinori, Kyoto, 601-8510 (JP)
(74) Representative: Müller Hoffmann & Partner

(56) References cited:
- JP-A- H1 090 228
- US-A1- 2006 144 124
- US-A1- 2011 120 096
- US-A1- 2016 115 850

## Description

### Technical Field

The present invention relates to an exhaust gas analysis system and exhaust gas analysis method for analyzing exhaust gas of an internal combustion engine.

### Background Art

In the past, as an exhaust gas analysis system for analyzing particulate matter contained in exhaust gas, as disclosed in Patent Literature 1, there has been one including a soot measuring system for measuring soot and an SOF measuring system for measuring a soluble organic fraction (SOF).

The soot measuring system uses a diffusion charger sensor (DCS) for measuring soot, and is configured to heat sampled exhaust gas to volatilize SOF and then guide the resulting exhaust gas to the DCS through a pipe.

However, in the above-described configuration, the exhaust gas is cooled in the pipe to the DCS and in the DCS and thereby the SOF contained in the exhaust gas is condensed, thus failing to accurately analyze soot.

In addition, in the above-described configuration, the SOF measuring system and the soot measuring system are both included in order to measure SOF and soot, thus causing the problem that the system becomes large-scale and expensive.

### Citation List

### Patent Literatures

Patent Literature 1: Japanese Unexamined Patent Application Publication No. 2006-153716. Other examples of prior art documents are : US2011/120096 and US2006/144124.

### Summary of Invention

### Technical Problem

Therefore, the present invention has been made in order to solve the above-described problems at once, and a main object thereof is to make it possible to accurately measure various particulate matter contained in exhaust gas without making a system large-scale or expensive.

### Solution to Problem

That is, an exhaust gas analysis system according to the present invention is defined in claim 1.

In such an exhaust gas analysis system, since the temperature control mechanism controls the first analyzer to a high temperature, the exhaust gas guided to the first analyzer is not cooled, and a volatile component such as SOF contained in the exhaust gas is not condensed but remains vaporized, thus making it possible to accurately analyze a nonvolatile component such as soot using the first analyzer. In addition, as an embodiment for controlling the temperature of the first analyzer, the first analyzer may be directly heated to control the temperature, or a pipe connected to the first analyzer may be heated to thereby control the temperature.

Further, by keeping the second analyzer at a lower temperature, the particulate matter containing the volatile component and the nonvolatile component can be analyzed using the second analyzer, and therefore by comparing an analysis result by the first analyzer and an analysis result by the second analyzer, the volatile component contained in the exhaust gas can be analyzer. As a result, without including both the soot measurement system and the SOF measurement system as in the conventional case, both the nonvolatile component and the volatile component can be analyzed, and therefore without making the system large-scale or expensive, the particulate matter contained in the exhaust gas can be accurately analyzed.

In order to equalize analysis conditions of the respective analyzers to compare the analysis result by the first analyzer and the analysis result by the second analyzer, it is preferable that the first analyzer and the second analyzer are ones using mutually the same analysis principle.

As the respective analyzers, arranging ones using the same analysis principle as described above makes it possible to accurately analyze the volatile component by comparing the analysis results by the respective analyzers.

In order to know the concentration or the like of the volatile component of the particulate matter, in the invention the exhaust gas analysis system further includes an information processor that acquires an output from the first analyzer and an output from the second analyzer, and by comparing the analysis results by the respective analyzers, calculates the concentration of particulate matter consisting of the volatile component contained in the exhaust gas or a value related to the concentration.

In order to know the concentration or the like of the volatile component in real time, it is preferable that the first analyzer is one that analyzes the exhaust gas flowing through the exhaust gas flow path in real time, and the second analyzer is one that analyzes the exhaust gas flowing through the branch flow path in real time.

Meanwhile, in recent years, there has been an increasing demand to measure the total amount of particulate matter including not only soot and SOF but also a sulfur component called sulfate. However, the above-described conventional configuration can measure only SOF and soot, but cannot measure the total amount of particulate matter.

Accordingly, in order to measure the total amount of the particulate matter contained in the exhaust gas, it is preferable that the first analyzer and the second analyzer are ones that measure the particulate matter with use of a diffusion charger method.

Using the diffusion charger method as described above makes it possible for the second analyzer to measure the total particulate matter including not only soot and SOF but also a sulfur component called sulfate.

In the invention the first analyzer measures the nonvolatile component of the particulate matter, and the second analyzer measures the nonvolatile component and the volatile component of the particulate matter.

In such a configuration, the volatile component contained in the exhaust gas can be analyzed by comparing the analysis result by the first analyzer and the analysis result by the second analyzer.

More specific embodiments include one in which the first analyzer measures particulate matter including at least soot, and the second analyzer measures particulate matter including at least soot, SOF, and sulfate.

It is preferable that the exhaust gas analysis system includes a volatile component calculation part that calculates the concentration of particulate matter including at least the SOF and the sulfate by, from the concentration of the particulate matter including at least the soot, the SOF, and the sulfate, which is obtained by the second analyzer, subtracting the concentration of the particulate matter including at least the soot, which obtained by the first analyzer.

Such a configuration makes it possible to know the concentration of the volatile component including at least the SOF and the sulfate of the particulate matter.

When heating the exhaust gas flow path to the first analyzer, the volume flow rate of the heated exhaust gas increases to increase flow speed, and therefore the exhaust gas subjected to the branching at the branch point reaches the first analyzer before reaching the second analyzer. As a result, the analysis result by the first analyzer and the analysis result by the second analyzer are not synchronized, and comparing these analysis results in an unsynchronized state causes a reduction in analysis accuracy.

Accordingly, it is preferable that a pipe forming the exhaust gas flow path from the branch point to the first analyzer is longer or larger in diameter than a pipe forming the branch flow path from the branch point to the second analyzer.

In such a configuration, the exhaust gas subjected to the branching at the branch point reaches the first analyzer and the second analyzer at almost the same time, and therefore the analysis result by the first analyzer and the analysis result by the second analyzer can be synchronized.

In order to ensure the analysis accuracy of the nonvolatile component by the first analyzer, it is preferable that the temperature of the first analyzer, which results from the control by the temperature control mechanism, is equal to or higher than the evaporating temperature of the volatile component contained in the exhaust gas.

In order to prevent the condensation of moisture contained in the exhaust gas in the exhaust gas flow path to ensure the analysis accuracy, it is preferable that a diluter is provided on the upper stream side than the branch point in the exhaust gas flow path.

Also, an exhaust gas analysis method according to the present invention is defined in claim 10.

### Advantageous Effects of Invention

According to the present invention configured as described above, it is possible to accurately analyze various particulate matter contained in exhaust gas without making a system large-scale or expensive.

### Brief Description of Drawings

FIG. 1 is a schematic diagram illustrating the configuration of an exhaust gas analysis system in the present embodiment;
FIG. 2 is a schematic diagram illustrating the configuration of a first analyzer and a second analyzer in the present embodiment; and
FIG. 3 is a functional block diagram illustrating functions of an information processor in the present embodiment.

### Description of Embodiments

In the following, one embodiment of the exhaust gas analysis system according to the present invention will be described with reference to the drawings.

An exhaust gas analysis system 100 of the present embodiment is one that analyzes components contained in exhaust gas discharged from an unillustrated internal combustion engine, and here used to measure particulate matter (PM) in the exhaust gas.

Specifically, the exhaust gas analysis system 100 includes: an exhaust gas flow path L1 through which sampled exhaust gas is introduced; a temperature control mechanism 10 that controls the temperature of the exhaust gas flow path L1; and a first analyzer 20a that is provided in the exhaust gas flow path L1 and measures the particulate matter contained in the exhaust gas.

The exhaust gas flow path L1 is configured to sample the total amount of the exhaust gas discharged from the internal combustion engine and also mix the sampled exhaust gas with diluent gas to produce diluted exhaust gas, and the exhaust gas flow path L1 is provided with a diluter referred to as a so-called full tunnel. In addition, the exhaust gas flow path L1 may be one using a so-called micro tunnel that is configured to sample part of the exhaust gas discharged from the internal combustion engine and dilute the sampled exhaust gas.

In the present embodiment, the exhaust gas flow path L1 is provided with multiple diluters 30, and specifically, a first diluter 30a and a second diluter 30b provided on the downstream side of the first diluter 30a are arranged in series. In addition, the number of diluters provided in the exhaust gas flow path L1 may be one.

The temperature control mechanism 10 is one that heats the downstream side of the second diluter 30b in the exhaust gas flow path L1, and specifically, a heater or the like that controls the temperature of a pipe forming the exhaust gas flow path L1 or the temperature of the exhaust gas flowing through the pipe to a predetermined set temperature (e.g., 191 °C) equal to or higher than the evaporating temperatures of volatile components contained in the exhaust gas.

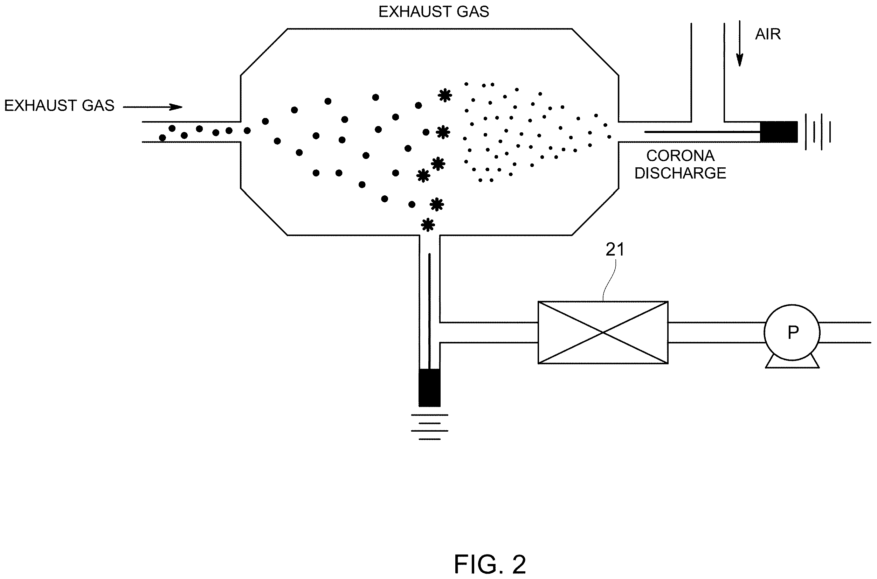

The first analyzer 20a is one that measures nonvolatile components including, for example, soot of the particulate matter contained in the exhaust gas, and here analyzes the nonvolatile components in the exhaust gas flowing through the exhaust gas flow path L1 in real time. Specifically, as illustrated in FIG. 2, the first analyzer 20a is one that can analyze the nonvolatile components, which is referred to as a diffusion charger sensor (hereinafter described as DCS) using a diffusion charger method, and here an analyzer for calculating the mass concentration of the particulate matter.

Describing in more detail, the DCS as the first analyzer 20a is configured to charge the surfaces of introduced particles by corona discharge and thereby allow a current detection part 21 to detect current whose magnitude corresponds to the total particle length per unit volume. In addition, by preliminarily obtaining correlation data indicating the relationship between the total particle length and mass, the mass concentration of the particulate matter can be continuously calculated on the basis of the correlation data and the output (specifically, a current value detected by the current detection part 21) of the first analyzer 20a.

Further, the exhaust gas analysis system 100 of the present embodiment is configured to allow the above-described temperature control mechanism 10 to control the temperature of the first analyzer 20a to a temperature higher than the temperature of the below-described second analyzer. Specifically, the temperature control mechanism 10 is one that heats the first analyzer 20a to a predetermined set temperature equal to or higher than the evaporating temperatures of the volatile components contained in the exhaust gas, and here heats the first analyzer 20a to the same set temperature (e.g., 191 °C) as that of the exhaust gas flow path L1.

In addition, a temperature control mechanism for controlling the temperature of the exhaust gas flow path L1 and a temperature control mechanism for controlling the temperature of the first analyzer 20a may be different, and the controlled temperature of the exhaust gas flow path L1 and the controlled temperature of the first analyzer 20a may be mutually different temperatures.

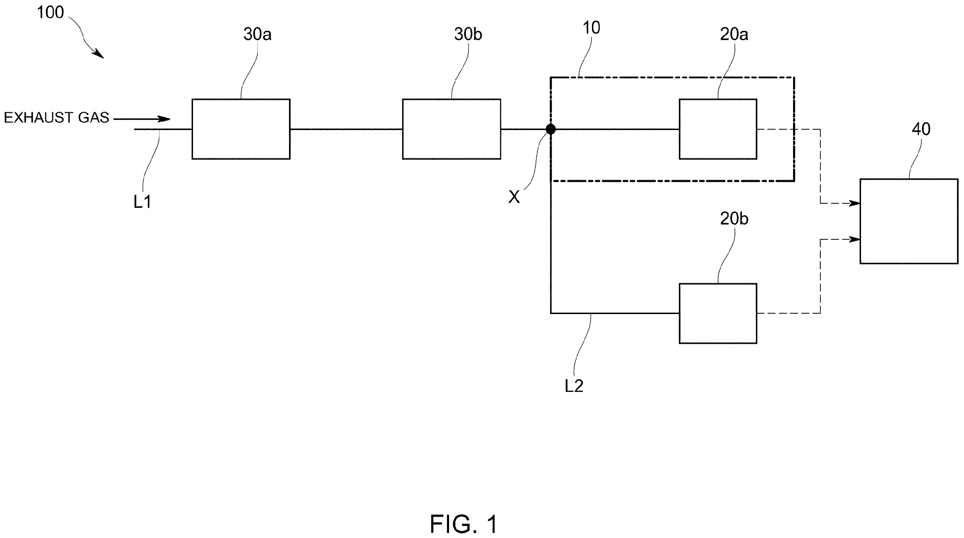

As illustrated in FIG. 1, the exhaust gas analysis system 100 of the present embodiment further includes: a branch flow path L2 branching from the exhaust gas flow path L1; the second analyzer 20b that is provided in the branch flow path L2 and measures the particulate matter contained in the exhaust gas; and an information processor 40 that acquires outputs from the first analyzer 20a and second analyzer 20b.

The branch flow path L2 branches from downstream of the second diluter 30b in the exhaust gas flow path L1 and from upstream of an area whose temperature is controlled by the temperature control mechanism 10 in the exhaust gas flow path L1, and here is kept at a temperature (e.g., room temperature) lower than the evaporating temperatures of the volatile components contained in the exhaust gas without being subjected to temperature control. In the present embodiment, the diameter of the pipe forming the exhaust gas flow path L1 from the branch point X to the first analyzer 20a is made larger than the diameter of a pipe forming the branch flow path L2 from the branch point X to the second analyzer 20b. In addition, more specific embodiments include a configuration in which for example, when the mass flow rate of the exhaust gas flowing into the first analyzer 20a is equal to the mass flow rate of the exhaust gas flowing into the second analyzer 20b, the volume of the exhaust gas flow path L1 from the branch point X to the first analyzer 20a and the volume of the branch flow path L2 from the branch point X to the second analyzer 20b are proportional to the absolute temperatures of the respective flow paths L1 and L2.

The second analyzer 20b is one that measures the total particulate matter by measuring the nonvolatile components and volatile components of the particulate matter contained in the exhaust gas, and here analyzes the total particulate matter in the exhaust gas flowing through the branch flow path L2 in real time. The nonvolatile components include at least the soot as described above, and the volatile components include at least a soluble organic fraction (SOF) and sulfur components (sulfates). The second analyzer 20b is one based on the same analysis principle as the first analyzer 20a, and here a DCS. The second analyzer 20b is kept at a temperature (e.g., room temperature) lower than the evaporating temperatures of the volatile components contained in the exhaust gas.

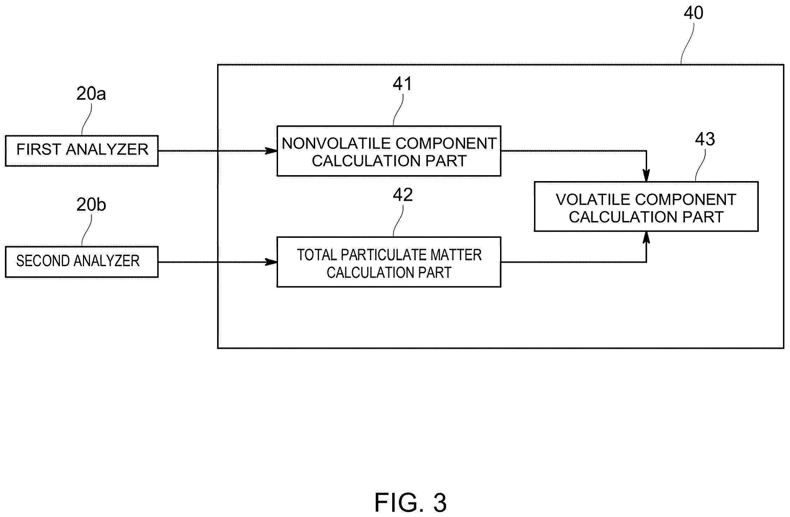

The information processor 40 is a computer including a CPU, a memory, an A/D converter, and the like. In addition, as illustrated in FIG. 3, the information processor 40 is configured so that the CPU and peripheral devices cooperate in accordance with a program stored in a predetermined area of the memory, and thereby the information processor 40 fulfills functions as a nonvolatile component calculation part 41, total particulate matter calculation part 42, and volatile component calculation part 43.

The nonvolatile component calculation part 41 is one that acquires the output from the first analyzer 20a to calculate the mass concentration of the nonvolatile components, and here continuously calculates the mass concentration of the nonvolatile components including at least the soot of the particulate matter.

The total particulate matter calculation part 42 is one that acquires the output from the second analyzer 20b to calculate the mass concentration of the total particulate matter contained in the exhaust gas, and here continuously calculates the mass concentration of the particulate matter including at least the soot, the SOF, and the sulfates.

The volatile component calculation part 43 is one that calculates the mass concentration of the volatile components on the basis of the results of the calculations by the nonvolatile component calculation part 41 and the total particulate matter calculation part 42. Specifically, the volatile component calculation part 43 continuously calculates the mass concentration of the volatile components including at least the SOF and the sulfates in real time by subtracting the mass concentration calculated by the nonvolatile component calculation part 41 from the mass concentration calculated by the total particulate matter calculation part 42.

In the exhaust gas analysis system 100 according to the present embodiment configured as described above, since the temperature control mechanism 10 controls the temperature of the first analyzer 20a to the temperature equal to or higher than the evaporating temperatures of the volatile components, the volatile components contained in the exhaust gas guided to the first analyzer 20a is not condensed but remains vaporized. This makes it possible to accurately calculate the mass concentration of the nonvolatile components including, for example, the soot and the like using the first analyzer 20a.

Further, since the branch flow path L2 and the second analyzer 20b are kept at the predetermined temperature lower than the evaporating temperatures of the volatile components, the mass concentration of the total particulate matter including at least the soot, the SOF, and the sulfates using the second analyzer 20b. As a result, the volatile components contained in the exhaust gas can be analyzed by comparing the calculation result by the first analyzer 20a and the calculation result by the second analyzer 20b. Accordingly, without including an analyzer for measuring soot and an analyzer for measuring SOF, the nonvolatile components and the volatile components can be both analyzed, and without making a system large-scale or expensive, the particulate matter contained in the exhaust gas can be accurately analyzed.

In addition, by analyzing both of the nonvolatile components and the volatile components as described above, from the result of analyzing the nonvolatile components, for example, the uniformity of fuel injection can be evaluated, and from the result of analyzing the volatile components, for example, the degree of incomplete combustion can be evaluated.

Also, since the diameter of the pipe forming the exhaust gas flow path L1 from the branch point X to the first analyzer 20a is made larger than the diameter of the pipe forming the branch flow path L2 from the branch point X to the second analyzer 20b, the exhaust gas subjected to the branching at the branch point X can be made to reach the first analyzer 20a and the second analyzer 20b at substantially the same time, and therefore the analysis result by the first analyzer 20a and the analysis result by the second analyzer 20b can be synchronized. This makes it possible to measure the mass concentrations or the like of the nonvolatile components, volatile components, and total particulate matter in real time.

Further, since the diluters are provided in the exhaust gas flow path L1, moisture contained in the exhaust gas can be prevented from being condensed in the exhaust gas flow path L1, and therefore analysis accuracy can be ensured.

Note that the present invention is not limited to the above-described embodiment.

For example, as an embodiment for synchronizing the analysis result by the first analyzer 20a and the analysis result by the second analyzer 20b, the pipe forming the exhaust gas flow path L1 from the branch point X to the first analyzer 20a may be made longer than the pipe forming the branch flow path L2 from the branch point X to the second analyzer 20b.

Also, the present invention may be adapted to make the exhaust gas subjected to the branching at the branch point X reach the first analyzer 20a and the second analyzer 20b at substantially the same time by providing the exhaust gas flow path L1 from the branch point X to the first analyzer 20a and the branch flow path L2 from the branch point X to the second analyzer 20b respectively with, for example, critical flow venturis, mass flow controllers, or the like to appropriately control the flow rate of the exhaust gas flowing into the first analyzer 20a and the flow rate of the exhaust gas flowing into the second analyzer 20b.

Further, when the exhaust gas subjected to the branching at the branch point X does not reach the first analyzer 20a and the second analyzer 20b at the same time, the volatile component calculation part 43 may be configured to calculate the mass concentration of the volatile components by, for example, from the mass concentration calculated by the total particulate matter calculation part 42, subtracting the mass concentration calculated by the nonvolatile component calculation part 41 a predetermined time before the time of the calculation by the total particulate matter calculation part 42.

The temperature control mechanism 10 in the above-described embodiment is one that directly heats the first analyzer 20a. However, the temperature control mechanism 10 may be configured to, without directly heating the first analyzer 20a, heat the downstream side of the branch point X in the exhaust gas flow path L1 connected to the first analyzer 20a, and use the resulting heat to control the temperature of the first analyzer.

Also, in the above-described embodiment, the second analyzer 20b is kept at room temperature, but may be heated or cooled to a temperature as long as the temperature is lower than the evaporating temperatures of the volatile components as measurement targets.

The first analyzer 20a and the second analyzer 20b are not limited to ones for calculating the mass concentration of the particulate matter, but may be ones for calculating a value related to the concentration of the particulate matter, such as the number (PN), mass, or number concentration of the particulate matter.

Without the need to include the functions as the nonvolatile component calculation part 41 and the total particulate matter calculation part 42 in the information processor, the first analyzer 20a may include the nonvolatile component calculation part 41 and the second analyzer 20b may include the total particulate matter calculation part 42.

Meanwhile, when the current detection part 21 of the first analyzer 20a includes an amplifier for amplifying an electrical signal, such as a preamplifier, and the amplifier is heated, noise occurs.

Accordingly, embodiments for solving such a problem include one in which the preamplifier is separated from the main body of the current detection part 21 to the extent that heat is not transferred to the preamplifier. However, when the separation distance between the preamplifier and the main body is long, a lead for connecting them also requires long length, and consequently noise is likely to occur on the lead. Therefore, as another embodiment, it is conceivable to use cooling means adapted to cool the preamplifier or the lead connecting between the preamplifier and the main body, such as a fan or a heat dissipation member.

Also, as still another embodiment, it is conceivable to arrange the preamplifier together with the current detection part 21 in a place not heated by the temperature control mechanism 10.

In addition, in each of the above-described embodiments, it is not necessarily required to entirely prevent heat from being transferred to the preamplifier. Some heat may be transferred as long as analysis accuracy can be ensured. Also, when desiring to control the preamplifier to a predetermined temperature, the preamplifier may be controlled to the predetermined temperature by changing the air volume of the above-described fan, the calorific value of the temperature control mechanism 10, or the like.

The first analyzer 20a or the second analyzer 20b is not limited to the DCS but only has to be one that can analyze the nonvolatile components of the particulate matter contained in the exhaust gas, and as such an analyzer, a condensed particle counter (CPC), an electrical low pressure impactor (ELPI), a scanning mobility particle sizer (SMPS), or the like can be cited.

The exhaust gas analysis system according to the present invention can be equipped in a vehicle running on a road, and in doing so, particulate matter consisting of nonvolatile components, particulate matter consisting of volatile components, and the total particulate matter contained in exhaust gas discharged from an internal combustion engine can be measured, for example, in real time during an actual on-road run.

Besides, it should be appreciated that the present invention is not limited to the above-described embodiment, but can be variously modified without departing from the scope thereof.

### Reference Signs List

100: Exhaust gas analysis system
L1: Exhaust gas flow path
L2: Branch flow path
10: Temperature control mechanism
20a: First analyzer
20b: Second analyzer
40: Information processor

## Claims

1. An exhaust gas analysis system (100) comprising:
an exhaust gas flow path (L1) through which exhaust gas of an internal combustion engine is introduced;
a branch flow path (L2) that branches from the exhaust gas flow path (L1);
a first analyzer (20a) that is provided downstream of a branch point of the branch flow path (L2) in the exhaust gas flow path (L1) and measures particulate matter contained in the exhaust gas;
a second analyzer (20b) that is provided in the branch flow path (L2) and measures the particulate matter contained in the exhaust gas; and
**characterized by** further comprising:
a temperature control mechanism (10) that controls temperature of the first analyzer (20a) to a temperature higher than a temperature of the second analyzer (20b); and wherein,
the first analyzer (20a) measures a nonvolatile component of the particulate matter, and the second analyzer (20b) measures the nonvolatile component and the volatile component of the particulate matter,
and further comprising an information processor (40) configured to acquire an output from the first analyzer (20a) and an output from the second analyzer (20b), and by comparing analysis results by the respective analyzers, calculate the concentration of particulate matter consisting of a volatile component contained in the exhaust gas or a value related to the concentration.

2. The exhaust gas analysis system (100) according to claim 1, wherein
the first analyzer (20a) and the second analyzer (20b) are ones using mutually a same analysis principle.

3. The exhaust gas analysis system (100) according to claim 1, wherein
the first analyzer (20a) is one that analyzes the exhaust gas flowing through the exhaust gas flow path (L1) in real time, and
the second analyzer (20b) is one that analyzes the exhaust gas flowing through the branch flow path (L2) in real time.

4. The exhaust gas analysis system (100) according to claim 1, wherein
the first analyzer (20a) and the second analyzer (20b) are ones that measure the particulate matter with use of a diffusion charger method.

5. The exhaust gas analysis system (100) according to claim 1, wherein
the first analyzer (20a) measures particulate matter including at least soot, and
the second analyzer (20b) measures particulate matter including at least the soot, SOF, and sulfate.

6. The exhaust gas analysis system (100) according to claim 5, comprising
a volatile component calculation part that calculates concentration of particulate matter including at least the SOF and the sulfate by subtracting concentration of the particulate matter including at least the soot, said concentration being obtained by the first analyzer (20a), from concentration of the particulate matter including at least the soot, the SOF, and the sulfate, said concentration being obtained by the second analyzer (20b).

7. The exhaust gas analysis system (100) according to claim 1, wherein
a pipe forming the exhaust gas flow path (L1) from the branch point to the first analyzer (20a) is longer or larger in diameter than a pipe forming the branch flow path (L2) from the branch point to the second analyzer (20b).

8. The exhaust gas analysis system (100) according to claim 1, wherein
the temperature of the first analyzer (20a) is equal to or higher than an evaporating temperature of the volatile component contained in the exhaust gas, the temperature resulting from the control by the temperature control mechanism (10).

9. The exhaust gas analysis system (100) according to claim 1, wherein
a diluter is provided on an upper stream side than the branch point in the exhaust gas flow path (L1).

10. An exhaust gas analysis method using an exhaust gas analysis system (100) comprising: an exhaust gas flow path (L1) through which exhaust gas of an internal combustion engine is introduced; a branch flow path (L2) that branches from the exhaust gas flow path (L1); a first analyzer (20a) that is provided downstream of a branch point of the branch flow path (L2) in the exhaust gas flow path (L1) and measures particulate matter contained in the exhaust gas; and a second analyzer (20b) that is provided in the branch flow path (L2) and measures the particulate matter contained in the exhaust gas,
the exhaust gas analysis method controlling temperature of the first analyzer (20a) to a temperature higher than a temperature of the second analyzer (20b); wherein,
the first analyzer (20a) measures a nonvolatile component of the particulate matter, and
the second analyzer (20b) measures the nonvolatile component and the volatile component of the particulate matter,
the exhaust gas analysis method further comprising calculating, by comparing an output from the first analyzer (20a) and an output from second analyzer (20b), the concentration of particulate matter consisting of a volatile component contained in the exhaust gas or a value related to the concentration.

## Patentansprüche

1. Abgasanalysesystem (100), aufweisend:
einen Abgasströmungsweg (L1), durch den Abgas eines Verbrennungsmotors eingeführt wird;
einen Abzweigströmungsweg (L2), der vom Abgasströmungsweg (L1) abzweigt;
einen ersten Analysator (20a), der im Abgasströmungsweg (L1) einem Abzweigpunkt des Abzweigströmungswegs (L2) nachgelagert vorgesehen ist und im Abgas enthaltene partikelförmige Stoffe misst;
einen zweiten Analysator (20b), der im Abzweigströmungsweg (L2) vorgesehen ist und die im Abgas enthaltenen partikelförmigen Stoffe misst; und
gekennzeichnet, indem es ferner aufweist:
einen Temperatursteuerungsmechanismus (10), der eine Temperatur des ersten Analysators (20a) auf eine höhere Temperatur als eine Temperatur des zweiten Analysators (20b) steuert; und wobei
der erste Analysator (20a) eine nichtflüchtige Komponente der partikelförmigen Stoffe misst und der zweite Analysator (20b) die nichtflüchtige Komponente und die flüchtige Komponente der partikelförmigen Stoffe misst,
und ferner einen Informationsprozessor (40) aufweist, der dafür konfiguriert ist, eine Ausgabe vom ersten Analysator (20a) und eine Ausgabe vom zweiten Analysator (20b) zu erfassen und durch Vergleichen von Analyseergebnissen durch die jeweiligen Analysatoren die Konzentration partikelförmiger Stoffe, die aus einer im Abgas enthaltenen flüchtigen Komponente bestehen, oder einen auf die Konzentration bezogenen Wert zu berechnen.

2. Abgasanalysesystem (100) nach Anspruch 1, wobei
der erste Analysator (20a) und der zweite Analysator (20b) welche sind, die ein gleiches Analyseprinzip wechselseitig nutzen.

3. Abgasanalysesystem (100) nach Anspruch 1, wobei
der erste Analysator (20a) einer ist, der das durch den Abgasströmungsweg (L1) strömende Abgas in Echtzeit analysiert, und
der zweite Analysator (20b) einer ist, der das durch den Abzweigströmungsweg (L2) strömende Abgas in Echtzeit misst.

4. Abgasanalysesystem (100) nach Anspruch 1, wobei
der erste Analysator (20a) und der zweite Analysator (20b) welche sind, die die partikelförmigen Stoffe unter Verwendung eines Diffusionsaufladungsverfahrens messen.

5. Abgasanalysesystem (100) nach Anspruch 1, wobei
der erste Analysator (20a) zumindest Ruß enthaltende partikelförmige Stoffe misst, und
der zweite Analysator (20b) zumindest den Ruß, einen SOF und Sulfat enthaltende partikelförmige Stoffe misst.

6. Abgasanalysesystem (100) nach Anspruch 5, aufweisend
einen Teil zur Berechnung einer flüchtigen Komponente, der eine Konzentration partikelförmiger Stoffe, die zumindest den SOF und das Sulfat enthalten, berechnet, indem eine Konzentration der zumindest den Ruß enthaltenden partikelförmigen Stoffe, wobei die Konzentration durch den ersten Analysator (20a) erhalten wird, von einer Konzentration der zumindest den Ruß, den SOF und das Sulfat enthaltenden partikelförmigen Stoffe subtrahiert wird, wobei die Konzentration durch den zweiten Analysator (20b) erhalten wird.

7. Abgasanalysesystem (100) nach Anspruch 1, wobei
ein Rohr, das den Abgasströmungsweg (L1) vom Abzweigpunkt zum ersten Analysator (20a) bildet, länger ist oder einen größeren Durchmesser hat als ein Rohr, das den Abzweigströmungsweg (L2) vom Abzweigpunkt zum zweiten Analysator (20b) bildet.

8. Abgasanalysesystem (100) nach Anspruch 1, wobei
die Temperatur des ersten Analysators (20a) gleich einer Verdampfungstemperatur der im Abgas enthaltenen flüchtigen Komponente oder höher ist, wobei sich die Temperatur aus der Steuerung durch den Temperatursteuerungsmechanismus (10) ergibt.

9. Abgasanalysesystem (100) nach Anspruch 1, wobei
ein Verdünner auf einer Seite stromaufwärts des Abzweigpunkts im Abgasströmungsweg (L1) vorgesehen ist.

10. Abgasanalyseverfahren, das ein Abgasanalysesystem (100) verwendet, welches aufweist: einen Abgasströmungsweg (L1), durch den Abgas eines Verbrennungsmotors eingeführt wird; einen Abzweigströmungsweg (L2), der vom Abgasströmungsweg (L1) abzweigt; einen ersten Analysator (20a), der im Abgasströmungsweg (L1) einem Abzweigpunkt des Abzweigströmungswegs (L2) nachgelagert vorgesehen ist und im Abgas enthaltene partikelförmige Stoffe misst; und einen zweiten Analysator (20b), der im Abzweigströmungsweg (L2) vorgesehen ist und die im Abgas enthaltenen partikelförmigen Stoffe misst,
wobei das Abgasanalyseverfahren eine Temperatur des ersten Analysators (20a) auf eine höhere Temperatur als eine Temperatur des zweiten Analysators (20b) steuert; wobei
der erste Analysator (20a) eine nichtflüchtige Komponente der partikelförmigen Stoffe misst, und
der zweite Analysator (20b) die nichtflüchtige Komponente und die flüchtige Komponente der partikelförmigen Stoffe misst,
wobei das Abgasanalyseverfahren ferner eine Berechnung, durch Vergleichen einer Ausgabe vom ersten Analysator (20a) und einer Ausgabe vom zweiten Analysator (20b), der Konzentration partikelförmiger Stoffe, die aus einer im Abgas enthaltenen flüchtigen Komponente bestehen, oder eines auf die Konzentration bezogenen Werts aufweist.

## Revendications

1. Système d'analyse de gaz d'échappement (100) comprenant :
une voie d'écoulement de gaz d'échappement (L1) à travers laquelle les gaz d'échappement d'un moteur à combustion interne sont introduits ;
une voie d'écoulement de ramification (L2) qui est ramifiée depuis la voie d'écoulement de gaz d'échappement (L1) ;
un premier analyseur (20a) qui est prévu en aval d'un point de ramification de la voie d'écoulement de ramification (L2) dans la voie d'écoulement de gaz d'échappement (L1) et mesure une matière particulaire contenue dans les gaz d'échappement ;
un deuxième analyseur (20b) qui est prévu dans la voie d'écoulement de ramification (L2) et mesure la matière particulaire contenue dans les gaz d'échappement ; et
**caractérisé en ce qu'**il comprend en outre :
un mécanisme de commande de température (10) qui commande la température du premier analyseur (20a) à une température supérieure à une température du deuxième analyseur (20b) ; et dans lequel
le premier analyseur (20a) mesure un composant non volatil de la matière particulaire, et le deuxième analyseur (20b) mesure le composant non volatil et le composant volatil de la matière particulaire,
et comprend en outre un processeur d'informations (40) configuré pour acquérir une sortie depuis le premier analyseur (20a) et une sortie depuis le deuxième analyseur (20b), et, en comparant des résultats d'analyse des analyseurs respectifs, calculer la concentration de matière particulaire consistant en un composant volatil contenu dans les gaz d'échappement ou une valeur liée à la concentration.

2. Système d'analyse de gaz d'échappement (100) selon la revendication 1, dans lequel
le premier analyseur (20a) et le deuxième analyseur (20b) sont des analyseurs utilisant mutuellement un même principe d'analyse.

3. Système d'analyse de gaz d'échappement (100) selon la revendication 1, dans lequel
le premier analyseur (20a) est un analyseur qui analyse les gaz d'échappement s'écoulant à travers la voie d'écoulement de gaz d'échappement (L1) en temps réel, et
le deuxième analyseur (20b) est un analyseur qui analyse les gaz d'échappement s'écoulant à travers la voie d'écoulement de ramification (L2) en temps réel.

4. Système d'analyse de gaz d'échappement (100) selon la revendication 1, dans lequel
le premier analyseur (20a) et le deuxième analyseur (20b) sont des analyseurs qui mesurent la matière particulaire à l'aide d'un procédé à chargeur à diffusion.

5. Système d'analyse de gaz d'échappement (100) selon la revendication 1, dans lequel
le premier analyseur (20a) mesure la matière particulaire incluant au moins de la suie, et
le deuxième analyseur (20b) mesure la matière particulaire incluant au moins de la suie, une fraction organique soluble et du sulfate.

6. Système d'analyse de gaz d'échappement (100) selon la revendication 5, comprenant
une partie de calcul de composant volatil qui calcule une concentration de matière particulaire incluant au moins la fraction organique soluble et le sulfate en soustrayant une concentration de la matière particulaire incluant au moins la suie, ladite concentration étant obtenue par le premier analyseur (20a), de la concentration de la matière particulaire incluant au moins la suie, la fraction organique soluble et le sulfate, ladite concentration étant obtenue par le deuxième analyseur (20b).

7. Système d'analyse de gaz d'échappement (100) selon la revendication 1, dans lequel
un tuyau formant la voie d'écoulement de gaz d'échappement (L1) du point de ramification au premier analyseur (20a) est plus long ou plus grand en diamètre qu'un tuyau formant la voie d'écoulement de ramification (L2) du point de ramification au deuxième analyseur (20b).

8. Système d'analyse de gaz d'échappement (100) selon la revendication 1, dans lequel
la température du premier analyseur (20a) est égale ou supérieure à une température d'évaporation du composant volatil contenu dans les gaz d'échappement, la température résultant de la commande par le mécanisme de commande de température (10).

9. Système d'analyse de gaz d'échappement (100) selon la revendication 1, dans lequel
un dilueur est prévu sur un côté plus en amont que le point de ramification dans la voie d'écoulement de gaz d'échappement (L1).

10. Procédé d'analyse de gaz d'échappement utilisant un système d'analyse de gaz d'échappement (100) comprenant : une voie d'écoulement de gaz d'échappement (L1) à travers laquelle les gaz d'échappement d'un moteur à combustion interne sont introduits ; une voie d'écoulement de ramification (L2) qui est ramifiée depuis la voie d'écoulement de gaz d'échappement (L1) ; un premier analyseur (20a) qui est prévu en aval d'un point de ramification de la voie d'écoulement de ramification (L2) dans la voie d'écoulement de gaz d'échappement (L1) et mesure une matière particulaire contenue dans les gaz d'échappement ; et un deuxième analyseur (20b) qui est prévu dans la voie d'écoulement de ramification (L2) et mesure la matière particulaire contenue dans les gaz d'échappement,
le procédé d'analyse de gaz d'échappement commandant la température du premier analyseur (20a) à une température supérieure à une température du deuxième analyseur (20b) ; dans lequel
le premier analyseur (20a) mesure un composant non volatil de la matière particulaire, et
le deuxième analyseur (20b) mesure le composant non volatil et le composant volatil de la matière particulaire,
le procédé d'analyse de gaz d'échappement comprenant en outre le calcul, par comparaison d'une sortie du premier analyseur (20a) et d'une sortie du deuxième analyseur (20b), de la concentration de matière particulaire consistant en un composant volatil contenu dans les gaz d'échappement ou une valeur liée à la concentration.
